# EUROPÄISCHE PATENTSCHRIFT

(11) **EP 0 553 059 B1**
(45) Veröffentlichungstag und Bekanntmachung des Hinweises auf die Patenterteilung: **09.10.1996**
(21) Anmeldenummer: 93810013.8
(22) Anmeldetag: 12.01.1993
(51) Int. Cl.: C07F 9/6574, C08K 5/527

(54) **Neue Cycloalkyliden-bisphenol-phosphite**
Novel cycloalkylidine-bis phenol phosphites
Nouveaux phosphites de cycloalkylidène bis phénols

(30) Priorität: 21.01.1992 CH 149/92
(43) Veröffentlichungstag der Anmeldung: 28.07.1993
(73) Patentinhaber: CIBA-GEIGY AG, 4002 Basel (CH)
(72) Erfinder: Nesvadba, Peter, Dr., CH-1723 Marly (CH)

(56) Entgegenhaltungen:
- DE-A- 3 009 634
- FR-A- 1 384 809

## Beschreibung

Die Erfindung betrifft neue Phosphite, Zusammensetzungen diese enthaltend, deren Verwendung als Stabilisatoren, sowie ein Verfahren zu deren Herstellung.

Aus der DE-B-1 237 312 und der US-A-4 206 111 kennt man spiroverknüpfte Bisphosphite, welche als Stabilisatoren für Polyolefine eingesetzt werden. EP-A-33 395 und US-A-4 463 112 umfassen generisch neben einer Vielzahl weiterer Phosphorigsäureester auch Bisphenol-phosphite, worin die phosphorige Säure mit monofunktionellen Alkoholen verestert ist. US-A-3 856 728 umfaßt generisch Bisphosphite des Typs 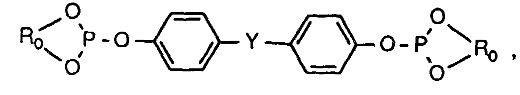 wobei Y ein Heteroatom enthält.

Es besteht weiterhin ein Bedarf an wirksamen Stabilisatoren für organische Materialien, die gegen oxidativen, thermischen oder lichtinduzierten Abbau empfindlich sind.

Gegenstand der Erfindung sind Verbindungen der Formel I 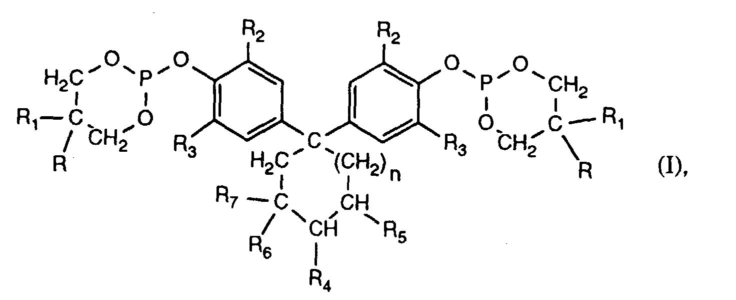 worin n 0, 1 oder 2 bedeutet,
R und R₁ unabhängig voneinander C₁-C₄-Alkyl oder zusammen einen 2,3-Dehydro-pentamethylenrest,
R₂ und R₃ unabhängig voneinander Wasserstoff, C₁-C₄-Alkyl oder C₅-C₆-Cycloalkyl darstellen und
R₄, R₅, R₆ und R₇ im Fall n = 1 unabhängig voneinander Wasserstoff oder C₁-C₄-Alkyl, im Fall n = 0 und im Fall n = 2 Wasserstoff bedeuten.

Bevorzugt sind Verbindungen der Formel I, worin n 1 oder 2 bedeutet.

Ebenfalls bevorzugt sind Verbindungen der Formel I, worin R₂ und R₃ unabhängig voneinander Wasserstoff, C₁-C₄-Alkyl oder Cyclohexyl darstellen.

Von besonderem Interesse sind Verbindungen der Formel I, worin n = 1 ist. Darunter hervorzuheben sind vor allem die Verbindungen, worin R₄ Wasserstoff ist und R₅, R₆ und R₇ unabhängig voneinander Wasserstoff oder Methyl bedeuten.

Von Interesse sind weiterhin Verbindungen der Formel I, worin R₂ und R₃ unabhängig voneinander Wasserstoff, Methyl, Butyl oder Cyclohexyl darstellen. Besonders Interesse kommt dabei solchen Verbindungen der Formel I zu, worin R₂ und R₃ unabhängig voneinander Wasserstoff, Methyl oder tert.-Butyl darstellen.

Bevorzugt sind auch Verbindungen der Formel I, worin R₅, R₆ und R₇ Wasserstoff sind und R₄ die Bedeutung Wasserstoff oder tert.-Butyl hat, insbesondere solche, worin R₄, R₅, R₆ und R₇ Wasserstoff bedeuten.

Besonders bevorzugt sind auch Verbindungen der Formel I, worin R und R₁ unabhängig voneinander Methyl oder Butyl oder zusammen einen 2,3-Dehydro-pentamethylenrest darstellen.

Bedeutet n = 0, so resultieren erfindungsgemäße Cyclopentylverbindungen der Formel

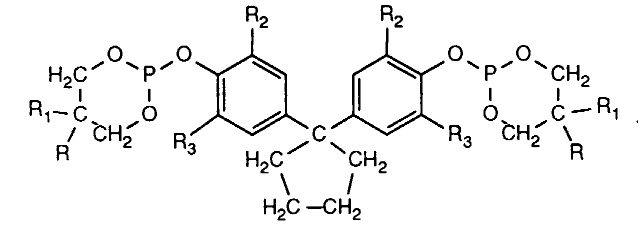

Für n = 2 oder n = 1 resultieren entsprechende Cycloheptyl- bezw. gegebenenfalls substituierte Cyclohexylverbindungen.

R, R₁, R₂, R₃, R₄, R₅, R₆ und R₇ als C₁-C₄-Alkyl kann linear oder verzweigt sein und bedeutet Methyl, Ethyl, 1-Propyl (n-Propyl), 2-Propyl (Isopropyl), 1-Butyl (n-Butyl), 2-Butyl (sec.-Butyl), 2-Methylpropyl (Isobutyl) oder 1,1-Dimethylethyl (tert.-Butyl).

Die Herstellung von Verbindungen der Formel I kann beispielsweise in der Weise erfolgen, daß man eine Verbindung der Formel II 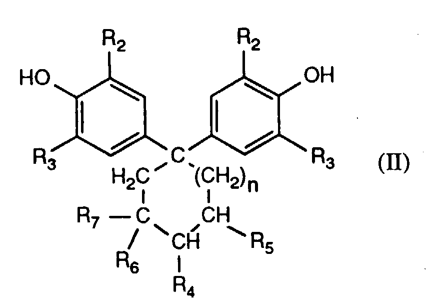 mit einem geeigneten Phosphorigsäurediesterhalogenid der Formel III 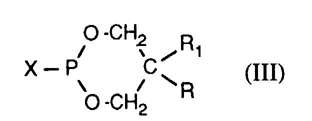 umsetzt, wobei X für ein Chlor-, Brom- oder Iodatom, vorzugsweise für ein Chloratom steht. Die Reste R, R₁, R₂, R₃, R₄, R₅, R₆ und R₇ sowie der Index n haben dabei die weiter oben für Formel I angegebenen Bedeutungen.

Die Erfindung betrifft daher auch ein Verfahren zur Herstellung von Verbindungen der Formel I, dadurch gekennzeichnet, daß man eine Verbindung der Formel II mit einem cyclischen Phosphorigsäurediesterhalogenid der Formel III umsetzt.

Bevorzugt ist ein Verfahren, worin das cyclische Phosphorigsäurediesterhalogenid der Formel III ein Chlorphosphit der Formel IIIa 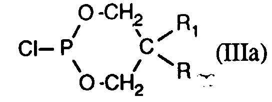 ist. Besonders bevorzugt ist ein Verfahren, worin die Umsetzung in Gegenwart einer Base durchgeführt wird. Geeignete organische Basen sind u.a. organische Amine (z.B. Trimethylamin, Triethylamin, Tributylamin, N,N-Dimethylanilin, N,N-Diethylanilin oder Pyridin), Hydride (z.B. Lithium-, Natrium-, Kaliumhydrid), metallorganische Verbindungen (z.B. Methyllithium, Butyllithium) oder Alkoholate (z.B. Natriummethylat). Als anorganische Basen kommen beispielsweise Alkalihydroxide, etwa Natriumhydroxid oder Kaliumhydroxid oder Alkalicarbonate, etwa Natrium- oder Kaliumcarbonat in Frage. Besonders vorteilhaft ist die Verwendung von Triethylamin oder Butyllithium als Base.

Die Umsetzung wird zweckmäßig in einem Lösungsmittel durchgeführt unter Vorlage eines der Edukte, vorzugsweise des Bisphenols der Formel II, sowie gegebenenfalls der Base.

Als Lösungsmittel können aliphatische und aromatische, gegebenenfalls halogenierte, Kohlenwasserstoffe oder Ether eingesetzt werden. Geeignete aromatische Kohlenwasserstoffe sind z.B. Benzol, Toluol, Xylol, oder als chlorierter aromatischer Kohlenwasserstoff beispielsweise Chlorbenzol. Aliphatische Kohlenwasserstoffe, die als Lösungsmittel verwendet werden können, sind beispielsweise Hexan, Pentan oder weitere Petroletherfraktionen. Als halogenierte aliphatische Kohlenwasserstoffe eignen sich z.B. Methylenchlorid oder Chloroform. Als Ether kommen z.B. Diethylether, Dibutylether oder Tetrahydrofuran in Frage. Bevorzugt als Lösungsmittel sind aromatische Kohlenwasserstoffe, insbesondere Toluol oder Xylol.

Zur Umsetzung wird zweckmäßig das zweite Edukt langsam unter Kühlen und Durchmischen zugefügt Bevorzugt handelt es sich dabei um das cyclische Phosphorigsäurediesterhalogenid der Formel III. Die Temperaturführung ist dabei nicht kritisch. Zweckmäßig wird die Mischung unter Rühren auf einer Temperatur zwischen -30°C und +50°C, beispielsweise zwischen 0°C und 20°C, insbesondere zwischen 5°C und 15°C, gehalten. Ein gegebenenfalls gebildetes Prezipitat des Hydrochlorids der Base wird zweckmäßig abfiltriert.

Die Edukte werden zweckmäßig im Mengenverhältnis 1 Mol der Verbindung der Formel II zu 2 Mol an Verbindung der Formel III eingesetzt. Es ist aber z.B. auch möglich, die Verbindung der Formel III im Überschuß einzusetzen, beispielsweise 2,01-2,2 Äquivalente. Die Base kann in unterschiedlichen Mengen eingesetzt werden, von katalytischen über stöchiometrische Mengen bis hin zu mehrfachem molarem Überschuß über die eingesetzte Menge an Verbindung der Formel III; bevorzugt wird sie in äquimolarer Menge bezüglich der Verbindung der Formel III verwendet.

Die Verbindung der Formel I kann aus der Reaktionsmischung durch übliche Aufarbeitungsmethoden isoliert werden, beispielsweise durch Eindampfen, Aufnehmen in einem Lösungsmittel, Abfiltrieren unlöslicher Bestandteile, Kristallisation und Trocknen, wobei der Lösevorgang und die Filtration gegebenenfalls bei Temperaturen nahe dem Siedepunkt des Lösungsmittels durchgeführt werden können. Geeignete Lösungsmittel für die Aufarbeitung sind die oben genannten; besonders vorteilhaft sind Kohlenwasserstoffe wie beispielsweise Ligroin oder Petrolether.

Die Bisphenole der Formel II sind bekannte Verbindungen, deren Herstellung beispielsweise nach Methoden erfolgen kann, wie sie in Houben-Weyl, 4. Auflage, Band VI/1c, Seiten 1028-1030, Thieme-Verlag, Stuttgart 1976 beschrieben sind. Auch die Herstellung der Phosphorigsäurediesterhalogenide ist bekannt; sie kann beispielsweise durch Umsetzung des Phosphortrihalogenids mit entsprechenden 1,3-Diolen erfolgen, analog der Beschreibung in Houben-Weyl, 4. Auflage, Band XII/2, Seiten 45-50, Thieme-Verlag, Stuttgart 1964.

Die Verbindungen der Formel I eignen sich hervorragend zum Stabilisieren von organischen Materialien gegen oxidativen, thermischen oder lichtinduzierten Abbau. Gegenstand der Erfindung sind daher auch Zusammensetzungen enthaltend (a) ein gegen oxidativen, thermischen oder lichtinduzierten Abbau empfindliches organisches Material und (b) mindestens eine Verbindung der Formel I, sowie die Verwendung von Verbindungen der Formel I zum Stabilisieren derartigen organischen Materials.

Beispiele für solche Materialien sind:
1. Polymere von Mono- und Diolefinen, beispielsweise Polypropylen, Polyisobutylen, Polybuten-1, Poly-4-methylpenten-1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen niederer Dichte (LDPE), lineares Polyethylen niederer Dichte (LLDPE), verzweigtes Polyethylen niederer Dichte (VLDPE).
   Polyolefine, d.h. Polymere von Monoolefinen, wie sie beispielhaft im vorstehenden Absatz erwähnt sind, insbesondere Polyethylen und Polypropylen, können nach verschiedenen Verfahren hergestellt werden, insbesondere nach den folgenden Methoden:
   a) radikalisch (gewöhnlich bei hohem Druck und hoher Temperatur).
   b) mittels Katalysator, wobei der Katalysator gewöhnlich ein oder mehrere Metalle der Gruppe IVb, Vb, VIb oder VIII enthält. Diese Metalle besitzen gewöhnlich einen oder mehrere Liganden wie Oxide, Halogenide, Alkoholate, Ester, Ether, Amine, Alkyle, Alkenyle und/oder Aryle, die entweder π- oder σ-koordiniert sein können. Diese Metallkomplexe können frei oder auf Träger fixiert sein, wie beispielsweise auf aktiviertem Magnesiumchlorid, Titan(III)chlorid, Aluminiumoxid oder Siliziumoxid. Diese Katalysatoren können im Polymerisationsmedium löslich oder unlöslich sein. Die Katalysatoren können als solche in der Polymerisation aktiv sein, oder es können weitere Aktivatoren verwendet werden, wie beispielsweise Metallalkyle, Metallhydride, Metallalkylhalogenide, Metallalkyloxide oder Metallalkyloxane, wobei die Metalle Elemente der Gruppen Ia, IIa und/oder IIIa sind. Die Aktivatoren können beipielsweise mit weiteren Ester-, Ether-, Amin- oder Silylether-Gruppen modifiziert sein. Diese Katalysatorsysteme werden gewöhnlich als Phillips, Standard Oil Indiana, Ziegler (-Natta), TNZ (DuPont), Metallocen oder Single Site Katalysatoren (SSC) bezeichnet.
2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/HDPE).
3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere und deren Copolymere mit Kohlenstoffmonoxid, oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander und mit unter 1) genannten Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z.B. Polyamiden.
4. Kohlenwasserstoffharze (z.B. C₅-C₉) inklusive hydrierte Modifikationen davon (z.B. Klebrigmacherharze) und Mischungen von Polyalkylenen und Stärke.
5. Polystyrol, Poly-(p-methylstyrol), Poly-(α-methylstyrol).
6. Copolymere von Styrol oder α-Methylstyrol mit Dienen oder Acrylderivaten, wie z.B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.
7. Pfropfcopolymere von Styrol oder α-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 6) genannten Copolymeren, wie sie z.B. als sogenannte ABS-, MBS-, ASA- oder AES-Polymere bekannt sind.
8. Halogenhaltige Polymere, wie z.B. Polychloropren, Chlorkautschuk, chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.
9. Polymere, die sich von α,β-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile.
10. Copolymere der unter 9) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.
11. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.
12. Homo- und Copolymere von cyclischen Ethern, wie Polyalkylenglykole, Polyethylenoxyd, Polypropylenoxyd oder deren Copolymere mit Bisglycidylethern.
13. Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind.
14. Polyphenylenoxide und -sulfide und deren Mischungen mit Styrolpolymeren oder Polyamiden.
15. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.
16. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, 12/12, Polyamid 11, Polyamid 12, aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylenterephthalamid oder Poly-m-phenylen-isophthalamid. Block-Copolymere der vorstehend genanntenPolyamide mit Polyolefinen, Olefin-Copolymeren, Ionomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").
17. Polyharnstoffe, Polyimide, Polyamid-imide und Polybenzimidazole.
18. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.
19. Polycarbonate und Polyestercarbonate.
20. Polysulfone, Polyethersulfone und Polyetherketone.
21. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.
22. Trocknende und nicht-trocknende Alkydharze.
23. Ungesättigte Polyesterharze, die sich von Copolyestern gsättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.
24. Vernetzbare Acrylharze, die sich von substituierten Acrylsäureestern ableiten, wie z.B von Epoxyacrylaten, Urethan-acrylaten oder Polyester-acrylaten.
25. Alkydharze, Polyesterharze und Acrylatharze, die mit Melaminharzen, Harnstoffharzen, Polyisocyanaten oder Epoxidharzen vernetzt sind.
26. Vernetzte Epoxidharze, die sich von Polyepoxiden ableiten, z.B. von Bis-glycidylethern oder von cycloaliphatischen Diepoxiden.
27. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose; sowie Kolophoniumharze und Derivate.
28. Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO.
29. Natürliche und synthetische organische Stoffe, die reine monomere Verbindungen oder Mischungen von solchen darstellen, beispielsweise Mineralöle, tierische oder pflanzliche Fette, Oele und Wachse, oder Oele, Wachse und Fette auf Basis synthetischer Ester (z.B. Phthalate, Adipate, Phosphate oder Trimellitate), sowie Abmischungen synthetischer Ester mit Mineralölen in beliebigen Gewichtsverhältnissen, wie sie z.B. als Spinnpräparationen Anwendung finden, sowie deren wässrige Emulsionen.
30. Wässrige Emulsionen natürlicher oder synthetischer Kautschuke, wie z.B. Naturkautschuk-Latex oder Latices von carboxylierten Styrol-Butadien-Copolymere
Vorzugsweise handelt es sich bei dem zu schützenden organischen Material der Komponente (a) um natürliche, halbsynthetische oder synthetische Polymere, insbesondere um synthetische Polymere. Besonders bevorzugt sind thermoplastische Polymere, vor allem Polyvinylchlorid oder Polyolefine, beispielsweise Polyethylen und Polypropylen (PP).

In den erfindungsgemäßen Zusammensetzungen sind die Verbindungen der Formel I zweckmäßig zu 0,01 bis 10, beispielsweise zu 0,05 bis 5, vorzugsweise zu 0,05 bis 3, insbesondere jedoch zu 0,05 bis 2 Gew.-% enthalten. Es kann sich dabei um eine oder mehrere der Verbindungen der Formel I handeln, und die Gewichtsprozentangaben beziehen sich auf die gesamte Menge dieser Verbindungen. Berechnungsgrundlage ist dabei das Gesamtgewicht des organischen Materials ohne die Verbindungen der Formel I.

Die Einarbeitung in die Materialien kann beispielsweise durch Einmischen oder Aufbringen der Verbindungen der Formel I und gegebenenfalls weiterer Additive nach den in der Technik üblichen Methoden erfolgen. Handelt es sich um Polymere, insbesondere synthetische Polymere, kann die Einarbeitung vor oder während der Formgebung, oder durch Aufbringen der gelösten oder dispergierten Verbindungen auf das Polymere, gegebenenfalls unter nachträglichem Verdunsten des Lösungsmittels erfolgen. Im Fall von Elastomeren können diese auch als Latices stabilisiert werden. Eine weitere Möglichkeit der Einarbeitung der Verbindungen der Formel I in Polymere besteht in deren Zugabe vor, während oder unmittelbar nach der Polymerisation der entsprechenden Monomeren bzw. vor der Vernetzung. Die Verbindungen der Formel I können dabei als solche, aber auch in encapsulierter Form (z.B in Wachsen, Ölen oder Polymeren) zugesetzt werden. Im Falle der Zugabe vor oder während der Polymerisation können die Verbindungen der Formel I auch als Regulatoren für die Kettenlänge der Polymeren (Kettenabbrecher) wirken.

Die Verbindungen der Formel I oder Mischungen davon können auch in Form eines Masterbatches, der diese Verbindungen beispielsweise in einer Konzentration von 2,5 bis 25 Gew.-% enthält, den zu stabilisierenden Kunststoffen zugesetzt werden.

Zweckmäßig kann die Einarbeitung der Verbindungen der Formel I nach folgenden Methoden erfolgen:
- als Emulsion oder Dispersion (z.B. zu Latices oder Emulsionspolymeren),
- als Trockenmischung während des Vermischens von Zusatzkomponenten oder Polymermischungen,
- durch direktes Zugeben in die Verarbeitungsapparatur (z.B. Extruder, Innenmischer usw.),
- als Lösung oder Schmelze.

Erfindungsgemäße Polymerzusammensetzungen können in verschiedener Form angewendet bzw. zu verschiedenen Produkten verarbeitet werden, z.B. als (zu) Folien, Fasern, Bändchen, Formmassen, Profilen, oder als Bindemittel für Lacke, Klebstoffe oder Kitte.

Wie bereits erwähnt, handelt es sich bei dem zu schützenden organischen Material insbesondere um natürliche, halbsynthetische oder synthetische, vorzugsweise synthetische, Polymere. Besonders vorteilhaft werden dabei thermoplastische Polymere geschützt, insbesondere Polyolefine. Vor allem ist dabei die ausgezeichnete Wirksamkeit der Verbindungen der Formel I als Verarbeitungsstabilisatoren (Hitzestabilisatoren) hervorzuheben. Zu diesem Zweck werden sie vorteilhaft vor oder während der Verarbeitung des Polymeren diesem zugesetzt.

Aber auch weitere Polymere (z.B. Elastomere) oder Schmierstoffe bzw. Hydraulikflüssigkeiten können gegen Abbau, z.B. lichtinduzierten oder/und thermooxidativen Abbau stabilisiert werden. Elastomere sind der obigen Aufzählung von möglichen organischen Materialien zu entnehmen.

Die in Frage kommenden Schmierstoffe und Hydraulikflüssigkeiten basieren beispielsweise auf mineralischen oder synthetischen Ölen oder Mischungen davon. Die Schmierstoffe sind dem Fachmann geläufig und in der einschlägigen Fachliteratur, wie beispielsweise in Dieter Klamann, "Schmierstoffe und verwandte Produkte" (Verlag Chemie, Weinheim, 1982), in Schewe-Kobek, "Das Schmiermittel-Taschenbuch" (Dr. Alfred Hüthig-Verlag, Heidelberg, 1974) und in "Ullmanns Enzyklopädie der technischen Chemie", Bd. 13, Seiten 85-94 (Verlag Chemie, Weinheim, 1977) beschrieben.

Die Erfindung betrifft auch ein Verfahren zum Schützen von organischem Material gegen oxidativen, thermischen oder lichtinduzierten Abbau, dadurch gekennzeichnet, daß man diesem Material als Stabilisator mindestens eine Verbindung der Formel I zusetzt bzw. auf dieses aufbringt.

Zusätzlich zu den erfindungsgemäßen Verbindungen können die erfindungsgemäßen Zusammensetzungen, insbesondere wenn sie organische, vorzugsweise synthetische, Polymere enthalten, noch weitere übliche Additive, z.B. Stabilisatoren, enthalten.

Beispiele für solche Additive sind:
1. Antioxidantien
   1.1. Alkylierte Monophenole, z.B. 2,6-Di-tert-butyl-4-methylphenol, 2-butyl-4,6-dimethylphenol, 2,6-Di-tert-butyl-4-ethylphenol, 2,6-Di-tert-butyl-4-n-butylphenol, 2,6-Di-tert-butyl-4-iso-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert-butyl-4-methoxymethylphenol, 2,6-Di-nonyl-4-methylphenol, 2,4-Dimethyl-6-(1'-methyl-undec-1'-yl)-phenol, 2,4-Dimethyl-6-(1'-methyl-heptadec-1'-yl)-phenol, 2,4-Dimethyl-6-(1'-methyl-tridec-1'-yl)-phenol und Mischungen davon.
   1.2. Alkylthiomethylphenole, z.B. 2,4-Di-octylthiomethyl-6-tert-butylphenol, 2,4-Di-octylthiomethyl-6-methylphenol, 2,4-Di-octylthiomethyl-6-ethylphenol, 2,6-Di-dodecylthiomethyl-4-nonylphenol.
   1.3. Hydrochinone und alkylierte Hydrochinone, z.B. 2,6-Di-tert-butyl-4-methoxyphenol, 2,5-Di-tert-butyl-hydrochinon, 2,5-Di-tert-amyl-hydrochinon, 2,6-Diphenyl-4-octadecyloxyphenol, 2,6-Di-tert-butyl-hydrochinon, 2,5-Di-tert-butyl4-hydroxyanisol, 3,5-Di-tert-butyl-4-hydroxyanisol, 3,5-Di-tert-butyl-4-hydroxyphenyl-stearat, Bis-(3,5-di-tert-butyl-4-hydroxyphenyl)adipat.
   1.4. Hydroxylierte Thiodiphenylether, z.B. 2,2'-Thio-bis-(6-tert-butyl-4-methylphenol), 2,2'-Thio-bis-(4-octylphenol), 4,4'-Thio-bis-(6-tert-butyl-3-methylphenol), 4,4'-Thio-bis-(6-tert-butyl-2-methylphenol), 4,4'-Thio-bis-(3,6-di-sec.-amylphenol), 4,4'-Bis-(2,6-dimethyl-4-hydroxyphenyl)-disulfid.
   1.5. Alkyliden-Bisphenole, z.B. 2,2'-Methylen-bis-(6-tert-butyl-4-methylphenol), 2,2'-Methylen-bis-(6-tert-butyl-4-ethylphenol), 2,2'-Methylen-bis-[4-methyl-6-(α-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert-butylphenol), 2,2'-Ethyliden-bis-(4,6-di-tert-butylphenol), 2,2'-Ethyliden-bis-(6-tert-butyl-4-isobutylphenol), 2,2'-Methylen-bis-[6-(α-methylbenzyl)-4-nonylphenol], 2,2'-Methylen-bis-[6-(α,α-dimethylbenzyl)-4-nonylphenol], 4,4'-Methylen-bis-(2,6-di-tert-butylphenol), 4,4'-Methylen-bis-(6-tert-butyl-2-methylphenol), 1,1-Bis-(5-tert-butyl-4-hydroxy-2-methylphenyl)butan, 2,6-Bis-(3-tert-butyl-5-methyl-2-hydroxybenzyl)-4-methylphenol, 1,1,3-Tris-(5-tert-butyl-4-hydroxy-2-methylphenyl)-butan, 1,1-Bis-(5-tert-butyl-4-hydroxy-2-methylphenyl)-3-n-dodecylmercaptobutan, Ethylenglycol-bis-[3,3-bis-(3'-tert-butyl-4'-hydroxyphenyl)-butyrat], Bis-(3-tert-butyl-4-hydroxy-5-methyl-phenyl)-dicyclopentadien, Bis-[2-(3'-tert-butyl-2'-hydroxy-5'-methyl-benzyl)-6-tert-butyl-4-methyl-phenyl]-terephthalat, 1,1Bis-(3,5-dimethyl-2-hydroxyphenyl)-butan, 2,2-Bis-(3,5-di-tert-butyl-4-hydroxyphenyl)-propan, 2,2-Bis-(5-tert-butyl-4-hydroxy-2-methylphenyl)-4-n-dodecylmercaptobutan, 1,1,5,5-Tetra-(5-tert-butyl-4-hydroxy-2-methylphenyl)-pentan.
   1.6. O-, N- und S-Benzylverbindungen, z.B. 3,5,3',5'-Tetra-tert-butyl-4,4'-dihydroxydibenzylether, Octadecyl-4-hydroxy-3,5-dimethylbenzyl-mercaptoacetat, Tris-(3,5-di-tert-butyl-4-hydroxybenzyl)-amin, Bis-(4-tert-butyl-3-hydroxy-2,6-dimethylbenzyl)-dithioterephthalat, Bis-(3,5-di-tert-butyl-4-hydroxybenzyl)-sulfid, Isöoctyl-3,5-di-tert-butyl-4-hydroxybenzyl-mercaptoacetat.
   1.7. Hydroxybenzylierte Malonate, z.B. Dioctadecyl-2,2-bis-(3,5-di-tert-butyl-2-hydroxybenzyl)-malonat, Di-octadecyl-2-(3-tert-butyl-4-hydroxy-5-methylbenzyl)-malonat, Di-dodecylmercaptoethyl-2,2-bis-(3,5-di-tert-butyl-4-hydroxybenzyl)-malonat, Di-[4-(1,1,3,3-tetramethylbutyl)-phenyl]-2,2-bis-(3,5-di-tert-butyl-4-hydroxybenzyl)-malonat.
   1.8. Hydroxybenzyl-Aromaten, z.B. 1,3,5-Tris-(3,5-di-tert-butyl-4-hydroxybenzyl)-2,4,6-trimethylbenzol, 1,4-Bis-(3,5-di-tert-butyl-4-hydroxybenzyl)-2,3,5,6-tetramethylbenzol, 2,4,6-Tris-(3,5-di-tert-butyl-4-hydroxybenzyl)-phenol.
   1.9. Triazinverbindungen, z.B. 2,4-Bis-octylmercapto-6-(3,5-di-tert-butyl-4-hydroxyanilino)-1,3,5-triazin, 2-Octylmercapto-4,6-bis-(3,5-di-tert-butyl-4-hydroxyanilino)-1,3,5-triazin, 2-Octylmercapto-4,6-bis-(3,5-di-tert-butyl-4-hydroxyphenoxy)-1,3,5-triazin, 2,4,6-Tris-(3,5-di-tert-butyl-4-hydroxyphenoxy)-1,2,3-triazin, 1,3,5-Tris-(3,5-di-tert-butyl-4-hydroxybenzyl)-isocyanurat, 1,3,5-Tris-(4-tert-butyl-3-hydroxy-2,6-dimethylbenzyl)-isocyanurat, 2,4,6-Tris-(3,5-di-tert-butyl-4-hydroxyphenylethyl)-1,3,5-triazin, 1,3,5-Tris-(3,5-di-tert-butyl-4-hydroxyphenylpropionyl)-hexahydro-1,3,5-triazin, 1,3,5-Tris-(3,5-dicyclohexyl-4-hydroxybenzyl)-isocyanurat.
   1.10. Benzylphosphonate, z.B. Dimethyl-2,5-di-tert-butyl-4-hydroxybenzylphosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat, Ca-Salz des 3,5-Di-tert-butyl-4-hydroxybenzyl-phosphonsäure-monoethylesters.
   1.11. Acylaminophenole, z.B. 4-Hydroxy-laurinsäureanilid, 4-Hydroxystearinsäureanilid, N-(3,5-di-tert-butyl-4-hydroxyphenyl)-carbaminsäureoctylester.
   1.12. Ester der β-(3,5-Di-tert-butyl-4-hydroxyphenyl)-propionsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.13. Ester der β-(5-tert-Butyl-4-hydroxy-3-methylphenyl)-propionsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.14. Ester der β-(3,5-Dicyclohexyl-4-hydroxyphenyl)-propionsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.15. Ester der 3,5-Di-tert-butyl-4-hydroxyphenylessigsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.16. Amide der β-(3,5-Di-tert-butyl-4-hydroxyphenyl)-propionsäure, wie z.B. N,N'-Bis-(3,5-di-tert-butyl-4-hydroxyphenylpropionyl)-hexamethylendiamin, N,N'-Bis-(3,5-di-tert-butyl-4-hydroxyphenylpropionyl)-trimethylendiamin, N,N'-Bis-(3,5-di-tert-butyl-4-hydroxyphenylpropionyl)-hydrazin.
2. UV-Absorber und Lichtschutzmittel
   2.1. 2-(2'-Hydroxyphenyl)-benztriazole, wie z.B. 2-(2'-Hydroxy-5'-methylphenyl)-benztriazol, 2-(3',5'-Di-tert-butyl-2'-hydroxyphenyl)-benztriazol, 2-(5'-tert-Butyl-2'-hydroxyphenyl)-benztriazol, 2-(2'-Hydroxy-5'-(1,1,3,3-tetramethylbutyl)phenyl)-benztriazol, 2-(3',5'-Di-tert-butyl-2'-hydroxyphenyl)-5-chlor-benztriazol, 2-(3'-tert-Butyl-2'-hydroxy-5'-methylphenyl)-5-chlor-benztriazol, 2-(3'-sec-Butyl-5'-tert-butyl-2'-hydroxyphenyl)-benztriazol, 2-(2'-Hydroxy-4'-octoxyphenyl)-benztriazol, 2-(3',5'-Di-tert-amyl-2'-hydroxyphenyl)-benztriazol, 2-(3',5'-Bis-(α,α-dimethylbenzyl)-2'-hydroxyphenyl)-benztriazol, Mischung aus 2-(3'-tert-Butyl-2'-hydroxy-5'-(2-octyloxycarbonylethyl)-phenyl)-5-chlor-benztriazol, 2-(3'-tert-Butyl-5'-[2-(2-ethylhexyloxy)-carbonylethyl]-2'-hydroxyphenyl)-5-chlor-benztriazol, 2-(3'-tert-Butyl-2'-hydroxy-5'-(2-methoxycarbonylethyl)phenyl)-5-chlor-benztriazol, 2-(3'-tert-Butyl-2'-hydroxy-5'-(2-methoxycarbonylethyl)phenyl)-benztriazol, 2-(3'-tert-Butyl-2'-hydroxy-5'-(2-octyloxycarbonylethyl)phenyl)-benztriazol, 2-(3'-tert-Butyl-5'-[2-(2-ethylhexyloxy)carbonylethyl]-2'-hydroxyphenyl)-benztriazol, 2-(3'-Dodecyl-2'-hydroxy-5'-methylphenyl)-benztriazol, und 2-(3'-tert-Butyl-2'-hydroxy-5'-(2-isooctyloxycarbonylethyl)phenyl-benztriazol, 2,2'-Methylen-bis-[4-(1,1,3,3-tetramethylbutyl)-6-benztriazol-2-yl-phenol]; Umesterungsprodukt von 2-[3'-tert-Butyl-5'-(2-methoxycarbonylethyl)-2'-hydroxy-phenyl]-benztriazol mit Polyethylenglycol 300; [R-CH₂CH₂-COO(CH₂)₃ 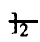 mit R = 3'-tert-Butyl-4'-hydroxy-5'-2H-benztriazol-2-yl-phenyl.
   2.2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.
   2.3. Ester von gegebenenfalls substituierten Benzoesäuren, wie z.B. 4-tert-Butyl-phenylsalicylat, Phenylsalicylat, Octylphenyl-salicylat, Dibenzoylresorcin, Bis-(4-tert-butyl-benzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoesäure-2-methyl-4,6-di-tert-butylphenylester.
   2.4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin.
   2.5. Nickelverbindungen, wie z.B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert-butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.
   2.6. Sterisch gehinderte Amine, wie z.B. Bis-(2,2,6,6-tetramethyl-piperidyl)-sebacat, Bis-(2,2,6,6-tetramethyl-piperidyl)-succinat, Bis-(1,2,2,6,6-pentamethylpiperidyl)-sebacat, n-Butyl-3,5-di-tert-butyl-4-hydroxybenzyl-malonsäure-bis(1,2,2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-Bis-(2,2,6,6-Tetramethyl-4-piperidyl)-hexamethylendiamin und 4-tert-Octylamino-2,6-dichlor-1,3,5-s-triazin, Tris-(2,2,6,6-tetramethyl-4-piperidyl)-nitrilotriacetat, Tetrakis-(2,2,6,6-tetramethyl-4-piperidyl)-1,2,3,4-butantetraoat, 1,1'-(1,2-Ethandiyl)-bis-(3,3,5,5-tetramethyl-piperazinon), 4-Benzoyl-2,2,6,6-tetramethylpiperidin, 4-Steryloxy-2,2,6,6-tetramethylpiperidin, Bis-(1,2,2,6,6-pentamethylpiperidyl)-2-n-butyl-2-(2-hydroxy-3,5-di-tert-butylbenzyl)-malonat, 3-n-Octyl-7,7,9,9-tetramethyl-1,3,8-triazaspiro[4.5]decan-2,4-dion, Bis-(1-octyloxy-2,2,6,6-tetramethylpiperidyl)-sebacat, Bis-(1-octyloxy-2,2,6,6-tetramethylpiperidyl)-succinat, Kondensationsprodukt aus N,N'-Bis-(2,2,6,6-tetramethyl-4-piperidyl)-hexamethylendiamin und 4-Morpholino-2,6-dichlor-1,3,5-triazin, Kondensationsprodukt aus 2-Chlor-4,6-di-(4-n-butylamino-2,2,6,6-tetramethylpiperidyl)-1,3,5-triazin und 1,2-Bis-(3-aminopropylamino)äthan, Kondensationsprodukt aus 2-Chlor-4,6-di-(4-n-butylamino-1,2,2,6,6-pentamethylpiperidyl)-1,3,5-triazin und 1,2-Bis-(3-aminopropylamino)-äthan, 8-Acetyl-3-dodecyl-7,7,9,9-tetramethyl-1,3,8-triazaspiro[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)-pyrrolidin-2,5-dion.
   2.7. Oxalsäurediamide, wie z.B. 4,4'-Di-octyloxy-oxanilid, 2,2'-Di-octyloxy-5,5'-di-tert-butyl-oxanilid, 2,2'-Di-dodecyloxy-5,5'di-tert-butyl-oxanilid, 2-Ethoxy-2'-ethyl-oxanilid, N,N'-Bis-(3-dimethylaminopropyl)-oxalamid, 2-Ethoxy-5-tert-butyl-2'-ethyloxanilid und dessen Gemisch mit 2-Ethoxy-2'-ethyl-5,4'-di-tert-butyl-oxanilid, Gemische von o- und p-Methoxy- sowie von o- und p-Ethoxy-di-substituierten Oxaniliden.
   2.8. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis-(2,4-dimethylphenyl)-1,3,5-triazin, 2-(2,4-Dihydroxyphenyl)-4,6-bis(2,4-dimethylphenyl)-1,3,5-triazin, 2,4-Bis-(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-[2-hydroxy-4-(2-hydroxy-3-butyloxy-propyloxy)phenyl]-4,6-bis(2,4-dimethylphenyl)-1,3,5-triazin, 2-[2-hydroxy-4-(2-hydroxy-3-octyloxy-propyloxy)phenyl]-4,6-bis(2,4-dimethylphenyl)-1,3,5-triazin.
3. Metalldesaktivatoren, wie z.B. N,N'-Diphenyloxalsäurediamid, N-Salicylal-N'-salicyloylhydrazin, N,N'-Bis-(salicyloyl)-hydrazin, N,N'-Bis-(3,5-di-tert-butyl-4-hydroxyphenylpropionyl)-hydrazin, 3-Salicyloylamino-1,2,4-triazol, Bis-(benzyliden)-oxalsäuredihydrazid, Oxanilid, Isophthalsäure-dihydrazid, Sebacinsäure-bis-phenylhydrazid, N,N'-Diacetal-adipinsäure-dihydrazid, N,N'-Bis-salicyloyl-oxalsäure-dihydrazid, N,N'-Bis-salicyloyl-thiopropionsäure-dihydrazid.
4. Weitere Phosphite und Phosphonite, wie z.B. Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert-butylphenyl)-phosphit, Diisodecylpentaerythrit-diphosphit, Bis-(2,4-di-tert-butylphenyl)-pentaerythritdiphosphit, Bis-(2,6-di-tert-butyl-4-methylphenyl)-pentaerythritdiphosphit, Bis-isodecyloxy-pentaerythritdiphosphit, Bis-(2,4-di-tert-butyl-6-methylphenyl)-pentaerythritdiphosphit, Bis-(2,4,6-tri-tert-butylphenyl)-pentaerythritdiphosphit, Tristearyl-sorbit-triphosphit, Tetrakis-(2,4-di-tert-butylphenyl)-4,4'-biphenylen-diphosphonit, 6-Isooctyloxy-2,4,8,10-tetra-tert-butyl-12H-dibenz[d,g]-1,3,2-dioxaphosphocin, 6-Fluor-2,4,8,10-tetra-tert-butyl-2-methyl-dibenz[d,g]-1,3,2-dioxaphosphocin, Bis-(2,4-di-tert-butyl-6-methylphenyl)-methylphosphit, Bis-(2,4-di-tert-butyl-6-methylphenyl)-ethylphosphit.
5. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-(β-dodecylmercapto)-propionat.
6. Polyamidstabilisatoren, wie z.B. Kupfersalze in Kombination mit Jodiden und/oder Phosphorverbindungen und Salze des zweiwertigen Mangans.
7. Basische Co-Stabilisatoren, wie z.B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Behenat, Mg-Stearat, Na-Ricinoleat, K-Palmitat, Antimonbrenzcatechinat oder Zinnbrenzcatechinat.
8. Nukleierungsmittel, wie z.B. 4-tert-Butylbenzoesäure, Adipinsäure, Diphenylessigsäure.
9. Füllstoffe und Verstärkungsmittel, wie z.B. Calciumcarbonat, Silikate, Glasfasern, Asbest, Talk, Kaolin, Glimmer, Bariumsulfat, Metalloxide und -hydroxide, Ruß, Graphit.
10. Sonstige Zusätze, wie z.B. Weichmacher, Gleitmittel, Emulgatoren, Pigmente, Optische Aufheller, Flammschutzmittel, Antistatika, Treibmittel.
11. Benzofuranone bzw. Indolinone, wie z.B. in US-A-4 325 863 oder US-A-4 338 244 beschrieben.

Vorzugsweise werden als weitere Stabilisatoren Antioxidantien, Lichtschutzmittel oder Verarbeitungsstabilisatoren eingesetzt. Daher sind insbesondere solche Zusammensetzungen Gegenstand der Erfindung, die als weitere Stabilisatoren Antioxidantien, Lichtschutzmittel oder Verarbeitungsstabilisatoren enthalten. Besonders bevorzugt sind Zusammensetzungen, enthaltend als weitere Stabilisatoren Phenole, gehinderte Amine (HALS), Thiosynenergisten und/oder weitere phosphorhaltige Verbindungen.

Die nachfolgenden Beispiele erläutern die Erfindung weiter. Angaben in Teilen oder Prozenten beziehen sich, ebenso wie in den Patentansprüchen und der übrigen Beschreibung, auf das Gewicht, sofern nichts anderes angegeben ist.

### Beispiel 1:

23,8 g 1,1-Bis-(4-hydroxy-3-tert.Butylphenyl)-cyclohexan und 19,2 ml Triethylamin werden in 360 ml Toluol gelöst. In diese Lösung wird nach Abkühlen auf 10°C unter Rühren 23,4 g 2-Chlor-5,5-dimethyl-1,3-dioxaphosphorinan langsam zugetropft. Anschließend wird die Mischung unter Rühren für 1 h auf 10°C gehalten. Daraufhin wird vom Triethylaminhydrochlorid abfiltriert, das Filtrat eingedampft und der Rückstand in 100 ml Ligroin bei 100°C gelöst. Nach erneuter Filtration und Abkühlen auf 5°C wird das Produkt abgesaugt und bei reduziertem Druck über Diphosphorpentoxid getrocknet. Man erhält 31,65 g der Verbindung der Formel 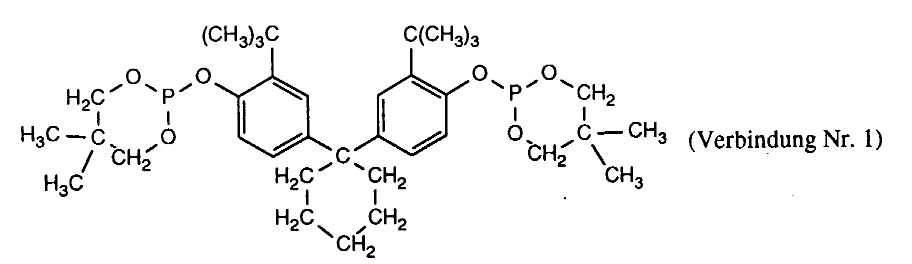 vom Schmelzpunkt 140-145 °C.

| Elementaranalyse: | % C | % H | % P |
|---|---|---|---|
| berechnet: | 67,06 | 8,44 | 9,61 |
| gefunden : | 67,03 | 8,40 | 9,56. |

### Beispiele 2-10:

Verbindungen Nr. 2 bis 5 und 7 bis 10 werden nach der in Beispiel 1 beschriebenen Methode hergestellt. Die Herstellung von Verbindung Nr. 6 folgt der Herstellungsvorschrift in Beispiel 1 mit der Ausnahme, daß als Base Butyllithium in stöchiometrischer Menge zu den phenolischen OH-Gruppen eingesetzt wird. Strukturformeln und Charakterisierung der erhaltenen Verbindungen sind in Tabelle 1 zusammengestellt.

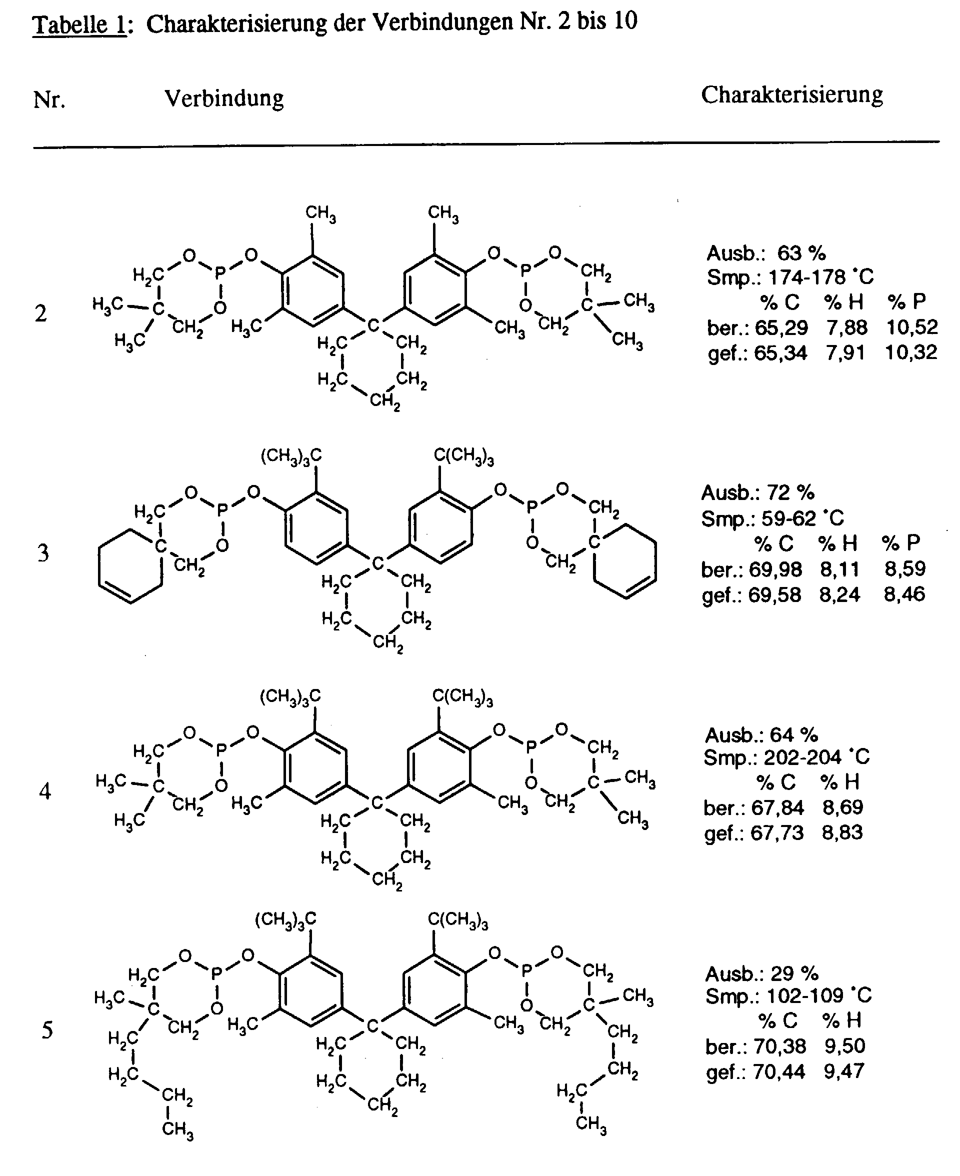

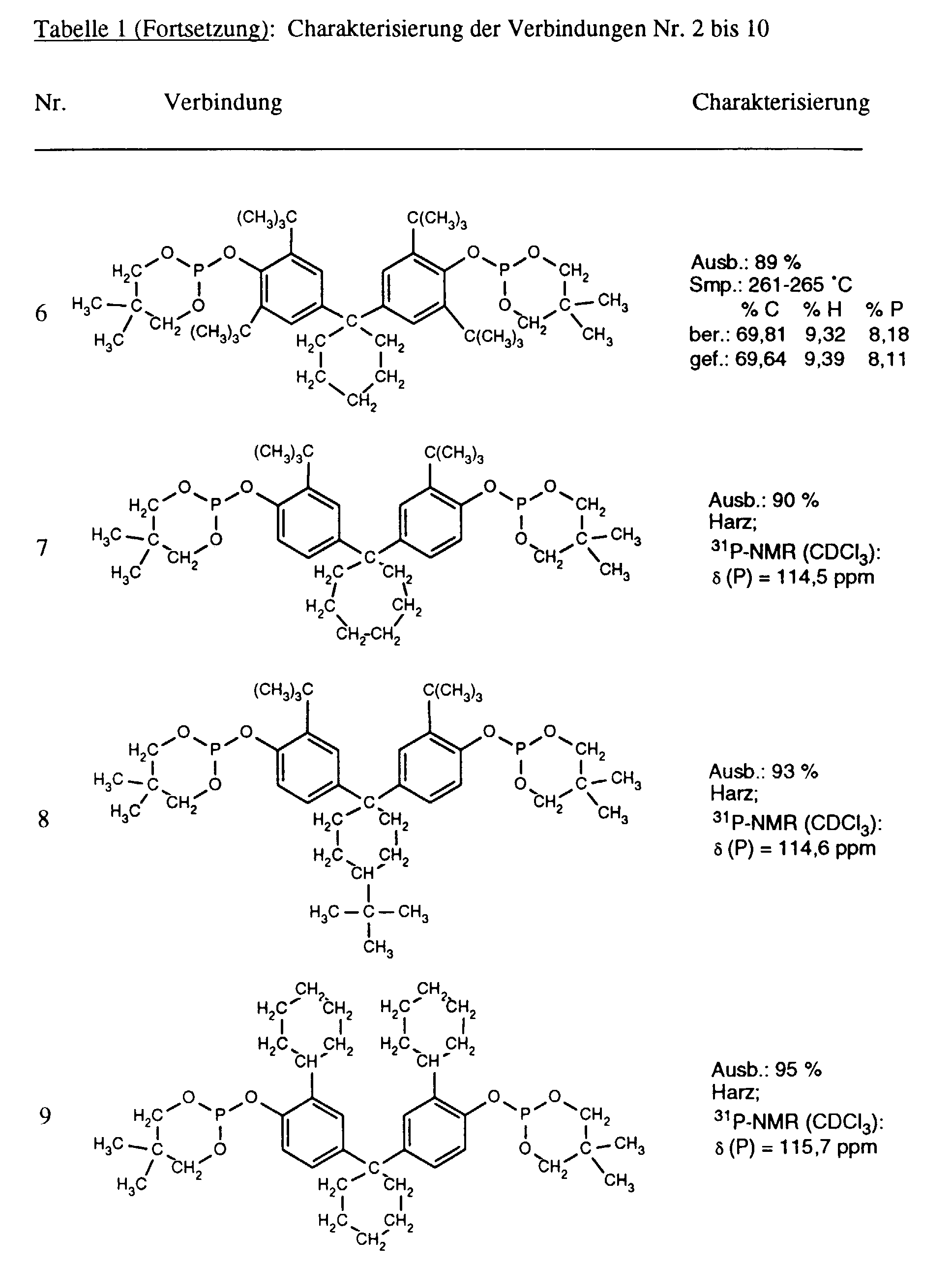

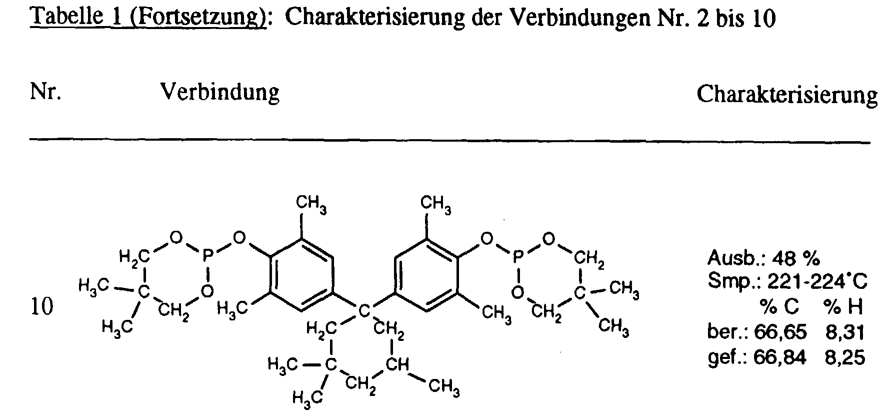

### Beispiel 11: Stabilisierung von Polypropylen bei Mehrfachextrusion.

1,3 kg Polypropylenpulver (Propathene® HF 24, Moplen® FL S20, Profax® 6501), mit einem in der Tabelle 2 angegebenen, bei 230°C und mit 2,16 kg gemessenen Schmelzindex, werden gemischt mit 0,05 % Irganox® 1010 (Pentaerythrityl-tetrakis-[3-(3,5-di-tert.-butyl-4-hydroxyphenyl)-propionat), 0,05 % Calciumstearat, einer in Tabelle 2 angegebnen Menge Hydrotalcit [DHT 4A®,Kyowa Chemical Industry Co., Ltd., Mg_{4.5}Al₂(OH)₁₃CO₃·3,5 H₂O] und 0,05 % der Verbindung aus Tabelle 1. Diese Mischung wird in einem Extruder mit einem Zylinderdurchmesser von 20 mm und einer Länge von 400 mm mit 100 Umdrehungen pro Minute extrudiert, wobei die 3 Heizzonen auf die folgenden Temperaturen eingestellt werden: 260°, 270°, 280°C. Das Extrudat wird zur Kühlung durch ein Wasserbad gezogen und anschliessend granuliert. Dieses Granulat wird wiederholt extrudiert. Der Schmelzindex wird während der Verarbeitung "online" gemessen und entspricht einem Wert, der konventionell bei 230°C und mit 2.16 kg/10 Min. gemessen würde. Grosse Zunahme des Schmelzindex bedeutet starken Kettenabbau, also schlechte Stabilisierung. Die Resultate sind in Tabelle 2 zusammengefasst.

**Tabelle 2:**

| Schmelzindex von Polypropylen vor Extrusion und nach 3 Extrusionen | | | |
|---|---|---|---|
| Hydrotalcit HT4A (ppm) | Schmelzindex vor 1. Extrusion | Verbindung aus Tabelle 1 | Schmelzindex nach 3. Extrusion |
| 0 | 3,4^{a)} | - | 23,0 |
| 0 | 3,4^{a)} | 1 | 6,2 |
| 0 | 3,4^{a)} | 3 | 6,1 |
| 300 | 1,8^{b)} | - | 12,0 |
| 300 | 1,8^{b)} | 2 | 3,0 |
| 300 | 1,8^{b)} | 4 | 2,7 |
| 300 | 3,2^{c)} | - | 18,9 |
| 300 | 3,2^{c)} | 1 | 5,6 |
| 300 | 3,2^{c)} | 5 | 5,2 |
| 300 | 3,2^{c)} | 6 | 5,5 |
| 300 | 3,2^{c)} | 9 | 6,3 |
| 300 | 3,2^{c)} | 10 | 5,2 |

| | | | |
|---|---|---|---|
| a) Propathene® HF 24 | | | |
| b) Moplen® FL S20, vorstabilisiert mit 150 ppm Irganox® 1076 | | | |
| c) Profax®6501, vorstabilisiert mit 250 ppm Irganox® 1076 | | | |

Irganox® 1076 bedeutet 3-[3,5-di-tert.-butyl-4-hydroxyphenyl]propionsäure-n-octadecylester.

### Beispiel 12: Test auf Stabilisierung von Polyacetal gegen Verfärbung während der Verarbeitung

100 Teile Polyacetalpulver (Hostaform® C) werden mit 0,3 Teilen Calciumstearat sowie den in der Tabelle 3 angegebenen Mengen Irganox® 1010 (Pentaerythrityl-tetrakis-[3-(3,5-di-tert.-butyl-4-hydroxyphenyl)-propionat) und Verbindung 1 aus Tabelle 1 vermischt. Die Mischung wird danach im Brabender bei 190°C und 30 Umdrehungen/Minute während 7 Minuten geknetet. Aus der Knetmasse werden anschliessend 1 mm dicke Platten gepresst. Als Mass der stabilisierenden Wirkung wird der Yellowness Index (YI) der Pressplatten (gemessen nach ASTM D-1925-70) herangezogen. Niedrige YI-Werte bedeuten wenig Verfärbung, hohe YI-Werte starke Verfärbung der Platten. Je kleiner die Verfärbung ist, desto wirksamer ist der Stabilisator. Die Resultate sind in der Tabelle 3 zusammengefasst.

**Tabelle 3:**

| Stabilisierung von Polyacetal gegen Verfärbung während der Verarbeitung | | |
|---|---|---|
| Irganox 1010 (Teile pro 100 Teile Polyacetal) | Verbindung 1 (Tabelle 1) (Teile pro 100 Teile Polyacetal) | Yellowness Index (YI) |
| 0,3 | - | 7,25 |
| - | 0,3 | 2,25 |
| 0,25 | 0,05 | 3,3 |

## Patentansprüche

1. Verbindungen der Formel I 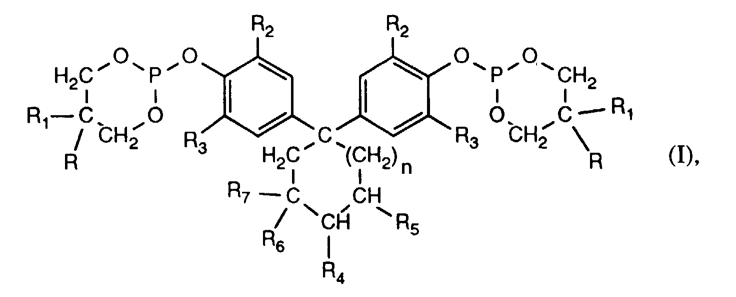 worin n 0, 1 oder 2 bedeutet,
R und R₁ unabhängig voneinander C₁-C₄-Alkyl oder zusammen einen 2,3-Dehydro-pentamethylenrest,
R₂ und R₃ unabhängig voneinander Wasserstoff, C₁-C₄-Alkyl oder C₅-C₆-Cycloalkyl darstellen und
R₄, R₅, R₆ und R₇ im Fall n = 1 unabhängig voneinander Wasserstoff oder C₁-C₄-Alkyl, im Fall n = 0 und im Fall n = 2 Wasserstoff bedeuten.

2. Verbindungen nach Anspruch 1, worin n 1 oder 2 bedeutet.

3. Verbindungen nach Anspruch 1, worin R₂ und R₃ unabhängig voneinander Wasserstoff, C₁-C₄-Alkyl oder Cyclohexyl darstellen.

4. Verbindungen nach Anspruch 1, worin n = 1 ist.

5. Verbindungen nach Anspruch 1, worin n = 1 ist, R₄ Wasserstoff darstellt und R₅, R₆ und R₇ unabhängig voneinander Wasserstoff oder Methyl bedeuten.

6. Verbindungen nach Anspruch 1, worin R₂ und R₃ unabhängig voneinander Wasserstoff, Methyl, Butyl oder Cyclohexyl darstellen.

7. Verbindungen nach Anspruch 1, worin R₂ und R₃ unabhängig voneinander Wasserstoff, Methyl oder tert.-Butyl darstellen.

8. Verbindungen nach Anspruch 1, worin R₅, R₆ und R₇ Wasserstoff sind und R₄ Wasserstoff oder tert.-Butyl bedeutet.

9. Verbindungen nach Anspruch 1, worin R₄, R₅, R₆ und R₇ Wasserstoff bedeuten.

10. Verbindungen nach Anspruch 1, worin R und R₁ unabhängig voneinander Methyl oder Butyl oder zusammen einen 2,3-Dehydro-pentamethylenrest darstellen.

11. Zusammensetzungen enthaltend (a) ein gegen oxidativen, thermischen oder lichtinduzierten Abbau empfindliches organisches Material und (b) mindestens eine Verbindung der Formel I nach Anspruch 1.

12. Zusammensetzungen nach Anspruch 11 enthaltend als Komponente (a) natürliche, halbsynthetische oder synthetische Polymere.

13. Zusammensetzungen nach Anspruch 11 enthaltend als Komponente (a) thermoplastische Polymere.

14. Zusammensetzungen nach Anspruch 11 enthaltend als Komponente (a) ein Polyolefin oder ein Polyvinylchlorid.

15. Zusammensetzungen nach Anspruch 11 enthaltend als Komponente (a) Polyethylen oder Polypropylen.

16. Zusammensetzungen nach Anspruch 11, enthaltend neben den Komponenten a) und b) ein Antioxidans, ein Lichtschutzmittel oder einen Verarbeitungsstabilisator.

17. Verwendung der Verbindungen der Formel I nach Anspruch 1 als Stabilisatoren für organische Materialien gegen oxidativen, thermischen oder lichtinduzierten Abbau.

18. Verwendung von Verbindungen der Formel I nach Anspruch 1 als Verarbeitungsstabilisatoren für thermoplastische Polymere, insbesondere für Polyolefine.

19. Verfahren zum Schützen von organischem Material gegen oxidativen, thermischen oder lichtinduzierten Abbau, dadurch gekennzeichnet, daß man diesem Material als Stabilisatoren mindestens eine Verbindung der Formel I zusetzt bzw. auf dieses aufbringt.

20. Verfahren zur Herstellung von Verbindungen der Formel I, dadurch gekennzeichnet, daß man eine Verbindung der Formel II 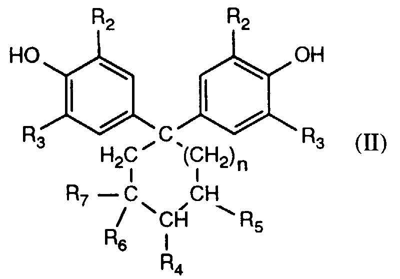 mit einem cyclischen Chlorphosphit der Formel IIIa 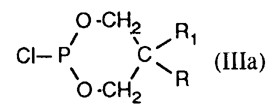 umsetzt, wobei die Reste R, R₁, R₂, R₃, R₄, R₅, R₆ und R₇ sowie der Index n die in Anspruch 1 angegebenen Bedeutungen haben.

## Claims

1. A compound of formula I 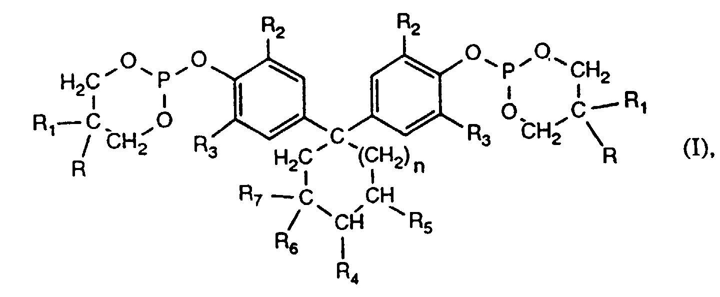 wherein n is 0, 1 or 2,
R and R₁ are each independently of the other C₁-C₄alkyl or, when taken together, are a 2,3-dehydropentamethylene radical,
R₂ and R₃ are each independently of the other hydrogen, C₁-C₄alkyl or C₅-C₆cycloalkyl,
and
R₄, R₅, R₆ and R₇, if n = 1, are each independently of one another hydrogen or
C₁-C₄alkyl, or, if n = 0 and if n = 2, are hydrogen.

2. A compound according to claim 1, wherein n is 1 or 2.

3. A compound according to claim 1, wherein R₂ and R₃ are each independently of the other hydrogen, C₁-C₄alkyl or cyclohexyl.

4. A compound according to claim 1, wherein n = 1.

5. A compound according to claim 1, wherein n = 1, R₄ is hydrogen and R₅, R₆ and R₇ are each independently of one another hydrogen or methyl.

6. A compound according to claim 1, wherein R₂ and R₃ are each independently of the other hydrogen, methyl, butyl or cyclohexyl.

7. A compound according to claim 1, wherein R₂ and R₃ are each independently of the other hydrogen, methyl or tert-butyl.

8. A compound according to claim 1, wherein R₅, R₆ and R₇ are hydrogen and R₄ is hydrogen or tert-butyl.

9. A compound according to claim 1, wherein R₄, R₅, R₆ and R₇ are hydrogen.

10. A compound according to claim 1, wherein R and R₁ are each independently of the other methyl or butyl or, when taken together, are a 2,3-dehydropentamethylene radical.

11. A composition comprising (a) an organic material susceptible to oxidative, thermal or light-induced degradation and (b) at least one compound of formula I according to claim 1.

12. A composition according to claim 11, wherein component (a) is a natural, semi-synthetic or synthetic polymer.

13. A composition according to claim 11, wherein component (a) is a thermoplastic polymer.

14. A composition according to claim 11, wherein component (a) is a polyolefin or a polyvinyl chloride.

15. A composition according to claim 11, wherein component (a) is polyethylene or polypropylene.

16. A composition according to claim 11, comprising in addition to components a) and b) an antioxidant, a light stabiliser or a processing stabiliser.

17. Use of a compound of formula I according to claim 1 as stabiliser for protecting organic materials against oxidative, thermal or light-induced degradation.

18. Use of a compound of formula I according to claim 1 as processing stabiliser for thermoplastic polymers, especially for polyolefins.

19. A method for protecting organic material against oxidative, thermal or light-induced degradation, which comprises adding or applying to said material at least one compound of formula I as stabiliser.

20. A process for the preparation of a compound of formula I, which comprises reacting a compound of formula II 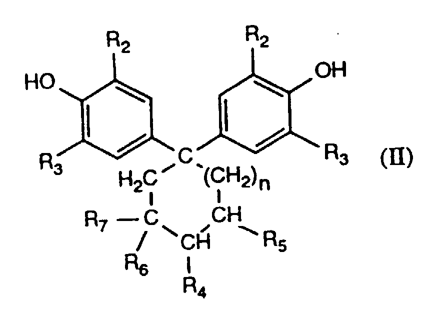 with a cyclic chlorophosphite of formula IIIa 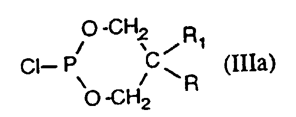 wherein the radicals R, R₁, R₂, R₃, R₄, R₅, R₆ and R₇ and the index n are as defined in claim 1.

## Revendications

1. Composés de formule I 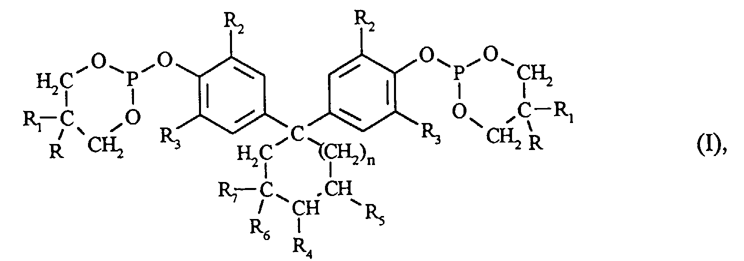 dans laquelle n est 0, 1 ou 2,
R et R₁ représentent indépendamment l'un de l'autre un reste alkyle en C₁-C₄ ou forment ensemble un reste 2,3-déhydropentaméthylène,
R₂ et R₃ représentent indépendamment l'un de l'autre un atome d'hydrogène ou un reste alkyle en C₁-C₄ ou cycloalkyle en C₅-C₆, et
lorsque n = 1, R₄, R₅, R₆ et R₇ représentent indépendamment les uns des autres un atome d'hydrogène ou un reste alkyle en C₁-C₄ et, lorsque n = 0 et lorsque n = 2, R₄, R₅, R₆ et R₇ sont des atomes d'hydrogène.

2. Composés selon la revendication 1, dans lesquels n est 1 ou 2.

3. Composés selon la revendication 1, dans lesquels R₂ et R₃ représentent indépendamment l'un de l'autre un atome d'hydrogène ou un reste alkyle en C₁-C₄ ou cyclohexyle.

4. Composés selon la revendication 1, dans lesquels n = 1.

5. Composés selon la revendication 1, dans lesquels n = 1, R₄ représente un atome d'hydrogène et R₅, R₆ et R₇ représentent indépendamment les uns des autres un atome d'hydrogène ou un reste méthyle.

6. Composés selon la revendication 1, dans lesquels R₂ et R₃ représentent indépendamment l'un de l'autre un atome d'hydrogène ou un reste méthyle, butyle ou cyclohexyle.

7. Composés selon la revendication 1, dans lesquels R₂ et R₃ représentent indépendamment l'un de l'autre un atome d'hydrogène ou un reste méthyle ou tert-butyle.

8. Composés selon la revendication 1, dans lesquels R₅, R₆ et R₇ représentent des atomes d'hydrogène et R₄ est un atome d'hydrogène ou un reste tert-butyle.

9. Composés selon la revendication 1, dans lesquels R₄, R₅, R₆ et R₇ représentent des atomes d'hydrogène.

10. Composés selon la revendication 1, dans lesquels R et R₁ représentent indépendamment l'un de l'autre un reste méthyle ou butyle ou forment ensemble un reste 2,3-déhydropentaméthylène.

11. Compositions contenant (a) une matière organique sensible à la dégradation due à l'oxydation, à la chaleur ou à la lumière et (b) au moins un composé de formule I selon la revendication 1.

12. Compositions selon la revendication 11, contenant comme constituant (a) des polymères naturels, semi-synthétiques ou synthétiques.

13. Compositions selon la revendication 11, contenant comme constituant (a) des polymères thermoplastiques.

14. Compositions selon la revendication 11, contenant comme constituant (a) une polyoléfine ou un poly(chlorure de vinyle).

15. Compositions selon la revendication 11, contenant comme constituant (a) un polyéthylène ou un polypropylène.

16. Compositions selon la revendication 11, contenant, en plus des constituants (a) et (b), un antioxydant, un agent de protection contre la lumière ou un stabilisant de mise en forme.

17. Utilisation des composés de formule I selon la revendication 1 pour la stabilisation de matières organiques contre la dégradation due à l'oxydation, la chaleur ou la lumière.

18. Utilisation de composés de formule I selon la revendication 1 comme stabilisants de mise en forme pour des polymères thermoplastiques, en particulier pour des polyoléfines.

19. Procédé pour protéger une matière organique contre la dégradation due à l'oxydation, la chaleur ou la lumière, caractérisé en ce que l'on ajoute à cette matière ou on applique sur cette matière, en tant que stabilisant, au moins un composé de formule I.

20. Procédé de préparation de composés de formule I, caractérisé en ce que l'on fait réagir un composé de formule II 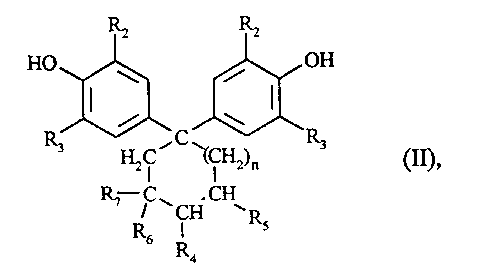 avec un chlorophosphite de formule IIIa 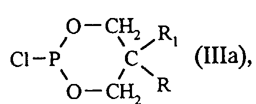 les restes R, R₁, R₂, R₃, R₄, R₅, R₆ et R₇, ainsi que l'indice n, ayant les significations indiquées dans la revendication 1.
